# EUROPEAN PATENT APPLICATION

(11) **EP 4 733 272 A1**
(43) Date of publication of application: **29.04.2026**
(21) Application number: 25819516.3
(22) Date of filing: 25.03.2025
(51) Int. Cl.: C02F 1/56, C02F 1/24, C02F 1/52, C02F 1/58, C02F 11/08

(54) **METHOD FOR CAPTURING PFAS, SYSTEM THEREFOR, METHOD FOR PRODUCING PFAS-REDUCED WATER, AND SYSTEM THEREFOR**

(30) Priority: 03.06.2024 JP 2024090161; 02.09.2024 WO PCT/JP2024/031505
(71) Applicant: PCS Co., Ltd., Sapporo-shi, Hokkaido 065-0015 (JP)
(72) Inventor: SUZUKI, Toshikatsu, Sapporo-shi, Hokkaido 065-0015 (JP)
(74) Representative: Twelmeier Mommer & Partner
(86) International application number: PCT/JP2025/011679
(87) International publication number: WO 2025/253753

(57) **Abstract**

The PFAS capturing system 10 comprises a structuring reactor 20 including a reaction tank 21 and a pressurized floating separation apparatus 30 including a circulation device 40, wherein into a contaminated water with a PFAS-containing aqueous mixture stored in the reaction tank 21 of the structuring reactor 20, structural agents 1 and 2 are fed from the feeding section 22, the structural agent 1 is including a water-soluble cationic polymeric flocculant (A) capable of forming a high order structure containing high molecular weight carbon chains as a main structural agent, the structural agent 2 is including a water-soluble cationic polymer flocculant (B) as a main structural agent with a smaller cationic value than the water-soluble cationic polymer flocculant (A) which contains a positive charge and has a higher cationic value than the water-soluble cationic polymeric flocculant (A), which including at least one of an inorganic agent containing polyiron, ferric chloride, ferrous sulfate, ferric sulfate, polyaluminum chloride, sulfate band, and zinc chloride. By feeding the structural agent 1, a structure 1 is formed in contaminated water, and PFAS with anionic properties are adsorbed on the structure 1, and further, on the PFAS adsorbed on the structure 1, made of iron cation, aluminum cation etc., with hydrophobic carbon chains is formed by the structural agent 2, PFAS is held stably in a sandwich-like state between the structure 1 and the structure 2 so that it can be separated from the water. The PFAS is then formed in a pressure floating separation tank 32 of the pressurized floating separation apparatus 30, where a jet of pressurized ultrafine bubble containing water is formed in the contaminated water, and the contaminated water is circulated in the tank 32, and the structure 1 and the captured PFAS are made to float by the ultrafine bubbles and taken out as flotation scum, and the rest is made into PFAS reduced water, thus enabling the separation and capture of 30% or more of PFAS that are difficult to capture in the contaminated water.

## Description

### Technical Field

This invention relates to a method and system for capturing PFAS in contaminated water containing aqueous mixtures containing organic fluorine compounds (hereinafter referred to as PFAS), and to a method and system for producing PFAS-reduced water.

### Background Art

PFAS exhibit lower reactivity in chemical bonding and weak electrostatic affinity than in normal. Their rigid, stable structure resembles that of persistent pesticides like DDT. Due to their stability, good storage properties, mobility, and ability to drastically reduce surface tension with minimal quantities, they have been used in applications such as foam agents for fire extinguishers.

Further, PFAS have been widely used in practical applications, leveraging their chemical stability due to low reactivity with other substances. Examples include well-known nonstick cookware, coatings for weapon interiors, and release agents for molded products.

Given that PFAS, which are so widely used, have already spread throughout the environment, methods and systems for capturing and treating them are urgently needed.

When attempting to capture PFAS by adding inorganic flocculants to PFAS-containing aqueous mixtures, dispersed colloidal particles aggregate to form large flocs. However, PFAS are molecular ultrafine particles with weak interactions and high kinetic energy, so they are rarely incorporated into the flocs and remain in a state where they can rapidly migrate to the floc surface. Consequently, certain flocculants failed to capture PFAS.

The detailed characteristics of this PFAS are as follows.

The properties of contaminated water containing PFAS-containing aqueous mixtures vary depending on the nature of the operations at the discharge source, however PFAS itself does not change based on the properties of the contaminated water.

In other words, PFAS are substances that remain stable even when the environment changes. Despite being low-molecular-weight, hydrophilic, and lipophilic, they are extremely insoluble in large quantities in water or oil. Yet, even in small amounts, they exhibit strong surface activity and foaming properties.

Furthermore, PFAS often disperse transparently without forming solids, exhibit low surface tension, and move to the surfaces of coexisting substances where they disperse, resulting in minimal aggregation.

Therefore, even when inorganic coagulants are added to PFAS-containing aqueous mixtures, PFAS exhibits properties that disperse colloids without forming significant coagulated colloids.

In the case of activated carbon adsorption, the presence of organic molecules or other PFAS causes PFAS adsorbed onto the activated carbon adsorption sites to easily desorb from those sites and be replaced by organic molecules or other substances. The reasons for this are known to be as follows.

The fluorine atoms bonded to the carbon skeleton of PFAS molecules are larger than the hydrogen atoms in typical hydrocarbons. This causes the carbon chain to adopt a twisted bond configuration, severely restricting the movement of the carbon chain. Further, the relatively short distance between fluorine and the carbon chain (backbone) is relatively short, resulting in significant overlap of electron orbitals-that is, a strong bond. This leads to limited interaction with other molecular species. Consequently, the structure of PFAS itself, where the fluorine and carbon chain are subtly twisted due to electronic repulsion, results in weak binding forces with other chemical species.

Representative PFAS molecules include PFOS and PFOA. While activated carbon adsorption is frequently cited in research papers as a common removal method for these compounds, no technology exists that can capture even a few percent of PFAS from contaminated water. Furthermore, as previously mentioned, when other organic compounds approach during activated carbon adsorption, the adsorption sites occupied by PFAS are easily displaced by these organic compounds, causing the PFAS to separate from the activated carbon. This effectively means the PFAS are not being adsorbed.

If PFAS can be separated, it must then be mineralized. Patent Literature 3 discloses inventions relating to a decomposition method for fluorine-containing polymers and a decomposition apparatus for fluorine-containing polymers. Patent Literature 4 discloses inventions relating to a decomposition treatment method for ion exchange membranes and an apparatus for performing it. In the inventions described in Patent Literature 3 and 4, attempts are made to decompose PFAS using subcritical water in the presence of sodium hydroxide and/or sodium hydroxide, or in the presence of alkali metal or alkaline earth metal hydroxides. However, the decomposition is insufficient.

### Citation List

### Patent Literature

Patent Literature 1: Japanese Patent Application Laid-Open No. 2021-146326
Patent Literature 2: Japanese Patent Application Laid-Open No. 2022-79109
Patent Literature 3: Japanese Patent No.7258319
Patent Literature 4: Japanese Patent Application Laid-Open No. 2024-156212

### Summary of Invention

### Technical Problem

An object of the present invention is to provide a method and system for capturing PFAS in contaminated water containing a PFAS-containing aqueous mixture, wherein at least 10% of the PFAS is adsorbed onto the interior and surface of the structure during the flocculation of the PFAS-containing contaminated water, as well as a method and system for producing PFAS-reduced water.

### Solutions to Problem

Through intensive research, the inventor discovered that the fluorine atoms in the stable fluorine-carbon bonds of the PFAS backbone readily acquire a negative charge, and that it possesses a molecular chain of hydrocarbon polymers that readily forms hydrogen bonds, not only carrying charge but also facilitating the formation of higher-order structures resembling three-dimensional spatial structures. Based on this observation, the inventor tried to feed a structural agent 1 and a structural agent 2 into contaminated water containing a PFAS, the structural agent 1 comprises a water-soluble cationic polymer flocculant (A) containing long carbon chains as the main component, along with at least one inorganic agent selected from polyferric sulfate, ferric chloride, ferrous sulfate, ferrous sulfate, polyaluminum chloride, barium sulfate, or zinc chloride, and the structural agent 2 primarily composed of a water-soluble cationic polymer flocculant (B) containing a positive charge with a smaller cationic charge than the aforementioned water-soluble cationic polymer flocculant (A).

This confirmed the following: namely, iron cations, aluminum cations, and other cations with hydrophobic carbon chains are present on the surface of the higher-order carbon chain structure, then these adsorb and capture anionic PFAS. Furthermore, the inventor discovered that these captured PFAS are held in a stable structure within flexible compounds possessing both carbon chains and cationic properties, sandwiched between flexible cationic water-soluble polymers with flexible carbon chains, and this allows for separation in water. We also confirmed that PFAS easily desorb into water using other methods. Further, since the higher-order structure changes with pH adjustment, we confirmed that pH adjusters can also be used as structural agents.

Hereinafter, structural agents refer to substances possessing higher-order structure-forming functions, such as flocculants that form higher-order structures in contaminated water, cationic amino acids like lysine, arginine, and histidine, proteins bearing quaternary cations, synthetic polymers with quaternary cations in their side chains, cationic surfactants, polyimine synthetic polymers, or pH adjusters. Additionally, inorganic agents containing inorganic cations-such as polyferric compounds, ferric chloride, ferrous sulfate, ferric sulfate, polyaluminum chloride, barium sulfate, and zinc chloride-are also structural agents. These substances readily migrate to the vicinity of PFAS and form part of the structure that restricts PFAS movement within or on the surface of three-dimensional higher-order structures.

The above-described problems can be solved by the following invention. A PFAS capturing method including a first capturing process, wherein a structural agent 1 comprising a water-soluble cationic polymeric flocculant (A) capable of forming higher-order structures containing high molecular weight carbon chains as a main agent is fed into contaminated water containing a PFAS-containing aqueous mixture and agitated to deposit a structure 1, and cause the aqueous mixture containing PFAS to be movably attached to the surface of the structure 1, and a second capturing process, wherein a water-soluble cationic polymer flocculant (B) comprising at least one of inorganic agents including polyiron, ferric chloride, ferrous sulfate, ferric sulfate, polyaluminum chloride, sulfate band, and zinc chloride, and containing a positive charge and having a smaller cationic value than the water-soluble cationic polymer flocculant (A) as the main agent of the structural agent 2 is poured and stirred after or simultaneously with the start of the first capturing process to precipitate a structure 2 comprising at least one of iron cation, aluminum cation, and zinc cation with hydrophobic carbon chains, and the surface of the structure 2 is attached to the aqueous mixture containing PFAS on the structure 1, wherein the aqueous mixture containing PFAS is held stably in a sandwich-like state between the structure 1 and the structure 2, so that it can be separated from the water.

Further, the above-described problems can be resolved by the following invention. A method for producing PFAS reduced water using the PFAS capturing method, comprising a pressurized floating separation process for separating PFAS from contaminated water containing the structure 1 and structure 2, wherein the PFAS is adsorbed the pressurized floating separation process is performed by forming a jet of pressurized ultrafine bubble containing liquid in the contaminated water containing the structure 1 and structure 2, which stably holds PFAS and the structure 1 and structure 2, causing PFAS trapped between the structure 1 and structure 2 to move to the surface of the ultrafine bubbles together with the structure consisting of structure 1 and structure 2, and to be surrounded by the ultrafine bubbles together with structure 1, thereby floating and it causes the PFAS to float and separate in the upper part of the contaminated water as scum.

Further, the above-described problems can be resolved by the following invention. A scum dehydration process in which the extracted floating scum is dehydrated to dehydrated flocculence, and a mineralization process in which the dehydrated flocculence is hydrolyzed in a subcritical atmosphere at high temperature and high pressure to promote mineralization by bonding fluorine atoms separated from the organic partial carbon chains of the PFAS contained in the dehydrated flocculence with iron, aluminum, and zinc present in the flocculence. The above-described problems can be resolved by the following invention.

Further, the above-described problems can be resolved by the following invention. A PFAS capturing system to capture PFAS from contaminated water containing an aqueous mixture containing PFAS, comprising, a feeding section for feeding structural agent 1 and structural agent 2 into the contaminated water stored in a reaction tank, a jet forming section for forming a jet of pressurized ultrafine bubble containing liquid in the contaminated water after reaction of the fed structural agent 1 and structural agent 2 with the contaminated water, and a floating scum extraction device, the feeding section is provided with a structural agent 1 feeding apparatus and a structural agent 2 feeding apparatus, and the structural agent1 feeding apparatus is configured to feed a structural agent 1 that uses a water-soluble cationic polymer flocculant (A) as a main agent being capable of forming a higher order structure containing high molecular weight carbon chains in stored contaminated water, the structural agent 2 feeding apparatus is configured to feed the structural agent 2, which is a water-soluble cationic polymeric flocculant (B) as a main agent, being consist of at least one of the inorganic agents including polyiron, ferric chloride, ferrous sulfate, ferric sulfate, polyaluminum chloride, sulfate band, and zinc chloride, and contains a positive charge and has a smaller cationic value than the water-soluble cationic polymeric flocculant (A), into the contaminated water, and the reaction tank is configured to form structure 1 and structure 2 by structural agent 1 and structural agent 2, respectively, to adsorb PFAS on structure 1 and to overlay PFAS in a trapped state with anionic properties, hydrophobic carbon chains the structure 2, which is a higher-order structure consisting of at least one of iron cation, aluminum cation, and zinc cation with hydrophobic carbon chain, is configured to hold the PFAS molecules stably by preventing their movement in a sandwich-like manner to enable separation in water, the jet forming section is configured to form a jet of pressurized ultrafine bubble containing water in the contaminated water which containing the structure 1 and structure 2 with PFAS sandwiched therebetween and causing the PFAS trapped in the higher-order structures of the structure 1 and the structure 2 to move to the surface of the ultrafine bubbles, thereby causing the PFAS to float and separate as floating scum from the contaminated water, the floating scum extraction device is configured to remove the floating the PFAS capturing system is configured to remove the floating scum from the surface of the contaminated water.

Further, the above-described problems can be resolved by the following invention. A PFAS capturing system wherein it has an additional structural agent feeding apparatus that adds a water-soluble anionic polymer flocculant as an additional structural agent to the contaminated water while the aqueous mixture containing PFAS is held stable and separable between the structure 1 and the structure 2 so that it can be separated in the water.

When PFAS are confined between structures 1 and 2 and their mobility is restricted, conventional polymeric anionic flocculants can also be added for flocculation purposes. This addition is also within the scope of the present invention. Using polymeric anionic flocculants without the higher-order structures formed by structures 1 and 2 would conversely result in dispersing PFAS in water.

Furthermore, the above-described problems can be resolved by the following invention, wherein configured to extract the remainder of the floating separation from the contaminated water as floating scum as PFAS reduced water.

### Advantageous Effects

According to the present invention a cationic structural agent 1, which is a water-soluble polymer flocculant containing a higher-order structure with a carbon chain as the main component a cationic structural agent 2 similar to the cationic structural agent 1 and with a lower cationic charge than the cationic structural agent 1 are fed into contaminated water containing PFAS. This causes iron cations accompanied by hydrophobic carbon chains, aluminum cations, etc., onto the surface of the carbon chain structure 1, which is formed by the polymeric cationic water-soluble structural agent 1 and facilitates the formation of a three-dimensional structure. These cations adsorb and capture the anionic PFAS. Furthermore, by sandwiching the captured PFAS between the carbon chain structure 1 and a flexible cationic water-soluble polymer (structure 2) with a flexible carbon chain derived from structural agent 2, it forms a stable structure within a flexible compound possessing both a carbon chain and cationic properties. This enables the capture of at least 10% of the PFAS in contaminated water through separation in water.

Further, according to the present invention, it was also confirmed that PFAS can be stably retained in water, separated from the water, and the remaining purified water rendered drinkable by reducing PFAS levels below acceptable limits.

Furthermore, when the captured PFAS-containing floating scum undergoes hydrolysis in a subcritical atmosphere, components such as iron and aluminum within structure 2 at nanoscale distances have a high probability of binding with the decomposed PFAS, thereby achieving the effect of inorganic conversion of the PFAS.

### Brief Description of Drawings

FIG. 1 is a block diagram showing an overview of a PFAS capturing system, including a PFAS reduction water production system for implementing the PFAS capturing method and PFAS reduction water production method of the present invention
FIG. 2 shows a schematic piping diagram showing the main components of the PFAS capturing system
FIG. 3 shows a flowchart illustrating the PFAS capturing method and PFAS reduction water production method according to the present invention

### Description of Embodiments

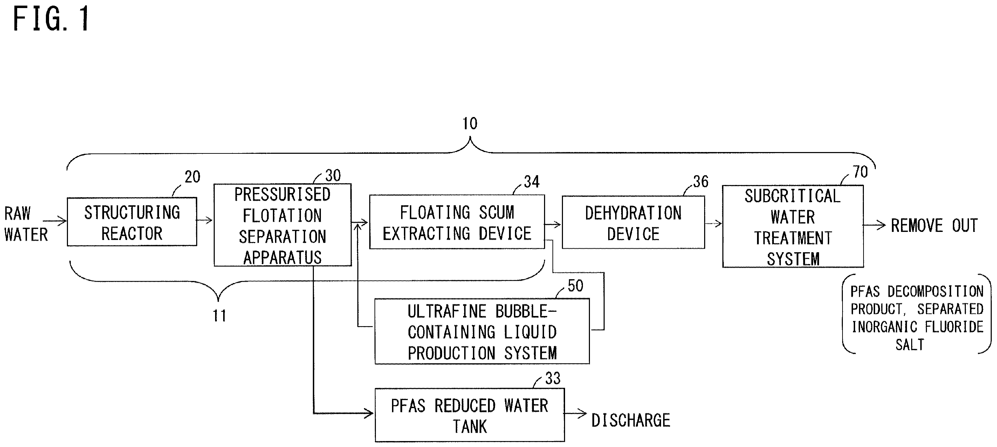

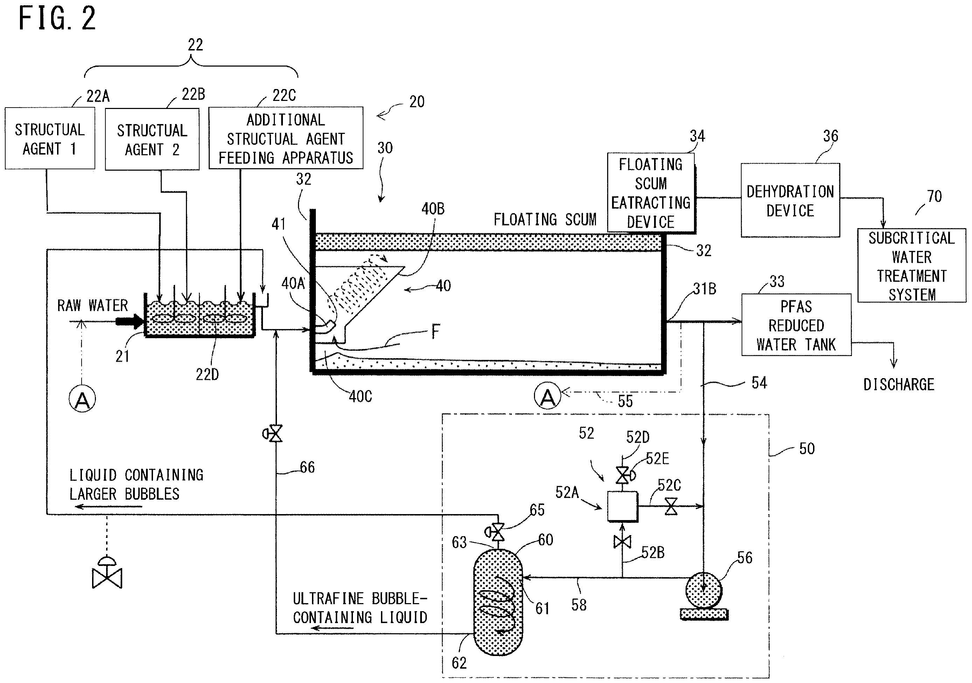

Referring to Figures 1 and 2, the PFAS capturing system 10 according to an embodiment of the present invention will be described. Note that the PFAS reduced water production system 11 is configured by removing the dehydration device 36 and the subcritical water treatment system 70 from the PFAS capturing system 10.

The PFAS capturing system 10 comprises a structuring reactor 20 including a reaction tank 21, a pressurized flotation separation apparatus 30 including a circulation apparatus 40, a floating scum extracting device 34, a dehydration device 36, an ultra-fine bubble containing liquid production system 50, and a subcritical water treatment system 70.

The structuring reactor 20 includes a feeding section 22 for introducing structural agent(s) 1 and 2 into contaminated water containing a PFAS-containing aqueous mixture stored in the reaction tank 21.

The pressurized floating separation apparatus 30 comprises a pressure flotation separation tank 32 for storing contaminated water containing the structure formed after reaction with the introduced structural agent(s) 1 and 2, and a circulation device 40 for forming a jet of pressurized liquid containing ultrafine bubbles within the contaminated water and circulating the contaminated water.

Additionally, the floating scum extracting device 34 is installed at the upper end of the pressurized floating separation apparatus 30 and is configured to remove the floated material.

The feeding section 22 comprises a structural agent 1 feeding apparatus 22A, a structural agent 2 feeding apparatus 22B, and an additional structural agent feeding apparatus 22C. The structural agent 1 feeding apparatus 22A is configured to dissolve structural agent 1, which primarily consists of a polymeric cationic water-soluble flocculant containing a higher-order carbon chain, into the stored contaminated water and feed it into the reaction tank 21. The reference numeral 22D in Figure 2 indicates a stirring device for agitating the liquid within the reaction tank 21.

Additionally, the additional structural agent feeding apparatus 22C is configured to feed a water-soluble anionic polymer flocculant as an additional structural agent into the contaminated water after the structural agent 2 has been fed into the reaction tank 21.

The structural agent 2 feeding apparatus 22B is configured to dissolve a positively charged structural agent 2, comprising at least one of polyferric chloride, ferric chloride, ferrous sulfate, ferric sulfate, polyaluminum chloride, barium sulfate, zinc chloride, etc., in the contaminated water and inject it into the reaction tank 21.

Next, a pressurized floating separation apparatus 30 according to an embodiment using the ultrafine bubble containing liquid will be described in detail with reference to FIG. 2.

As shown in FIG. 2, the pressurized floating separation apparatus 30 according to the embodiment includes a pressure flotation separation tank 32 provided with an inlet 41 at one end. In the pressurized floating separation apparatus 30, the ultrafine bubble containing liquid is mixed with a contaminated water as a subject to be cleansed, and the mixed liquid is poured into the pressure flotation separating tank 32 from the inlet 41. A structure 1 and a dissolved component in the contaminated water are adsorbed on an interface of ultrafine bubbles, and caused to be floated, thereby being separated from the contaminated water and extracted. In addition, the remaining contaminated water is discharged as a treated liquid.

The pressurized floating separation apparatus 30 has the circulation device 40 that circulates the mixed liquid of the contaminated water containing the structure 1 and the ultrafine bubble containing liquid in the pressure flotation separation tank 32, and a separated substance extracting device 34 that extracts scum floated on a liquid surface of the ultrafine bubble containing liquid in the pressure flotation separation tank 32.

In the embodiment, the contaminated water including the structure(s) 1, 2 and the ultrafine bubble containing liquid are shown as liquid. However, "liquid" may be "a water" basically, or maybe a liquid except water or water mixed with another liquid according to properties of the contaminated water.

The circulation device 40 is composed of a swirling discharge pipe 40A, a swirling flow guide 40B, and a clearance 40C. The swirling discharge pipe 40A is provided on an end portion (in the drawing, left end portion) of the pressure flotation separation tank 32 so as to be projected. A tip of the swirling discharge pipe 40A is curved diagonally upward, and a tip opening thereof serves as the inlet 41. The swirling discharge pipe 40A has a curved pipe shape with which the mixed liquid of the raw liquid and the ultrafine bubble containing liquid is jetted diagonally upward, and is configured to jet the mixed liquid as a swirling flow by a fixed fin (not shown in drawings) in the pressure flotation separation tank 32.

The swirling flow guide 40B surrounds the swirling discharge pipe 40A, and is a cylindrical body that guides a swirling flow discharged from the swirling discharge pipe 40A diagonally upward and has an opening at the top and bottom. The swirling flow guide 40B is disposed so as to guide a swirling flow jetted from the inlet 41A diagonally forward. The clearance 40C is provided between a lower end opening of the swirling discharge pipe 40A and the bottom of the pressure flotation separation tank 32 so that the swirling flow circulated in the pressure flotation separation tank 32 flows from the lower end opening into the swirling discharge pipe 40A.

The pressurized floating separation apparatus 30 has the floating scum extracting device 34 for extracting scum floated on the liquid surface in the pressure flotation separation tank 32. The remaining liquid after the floating scum was extracted is discharged as a treated liquid from a discharge port 31B. The discharge port 31B is connected to a pressurization pump 56 through an inlet pipe 52B in an ultrafine bubble containing liquid production system 50.

To the treated liquid from the above-described pressurized floating separation apparatus 30, ultrafine bubbles are added by the ultrafine bubble containing liquid production system 50, and the liquid is separated into a liquid containing larger bubbles and a liquid containing ultrafine bubbles by a bubble containing liquid separating system 60. The ultrafine bubble containing liquid is pressurized and passes through a pressurized liquid pipe 66, and is added to contaminated water, discharged from a reaction tank 21 is added. The ultrafine bubble containing liquid then flows as the swirling flow from the inlet 41 into the pressure flotation separation tank 32.

When the pressurized floating separation apparatus 30 is operated for a predetermined time or more, the sedimentation isolates are settled on the bottom face of the pressure flotation separation tank 32. The sedimentation isolates are also sucked from the clearance 40C to the swirling flow guide 40B, and circulated in the pressure flotation separation tank 32 together with the swirling flow from the swirling discharge pipe 40A.

In the pressurized floating separation apparatus 30 according to the embodiment, the ultrafine bubble containing liquid is poured into contaminated water in which the structure 1 and 2 are dissolved and added. After that, a helical flow that is upward from a left end to right in FIG. 2 is formed by the swirling flow guide 40B.

In another, the clearance 40C is formed between a lower end of the swirling flow guide 40B and the bottom of the pressure flotation separation tank 32. The liquid in the pressure flotation separation tank 32 is rolled together by the above-described swirling flow to form a large circulating flow in the pressure flotation separation tank 32.

In this circulating flow, the structural agent(s) 1 and 2 combined with PFAS can incorporate a trace amount of particles of, for example, cesium that accidentally comes into contact therewith. However, when the ultrafine bubbles, which traces of particle accompanied by PFAS are sorbed at the gas-liquid interface of fine bubbles by hydrophobic effects while being incorporated into a three-dimensional molecular structure (higher-order structure), are not present, the flocculant can hardly adsorb the particles.

The ultrafine bubbles always allow the floated and separated substance to partially come into contact with the structural agent 1 due to the area of interface of the ultrafine bubbles, and to be incorporated as a coagulated floc that is electrically neutralized. As a result, floated substances are formed stably floated substance. The substance is floated on the liquid surface as the floating scum.

The floating scum is collected at a right end in FIG. 2 by the floating scum extracting device 34, and is further collected upward and discharged outside.

The discharged floating scum is dehydrated by a dehydration device 36, and put in a container. A liquid generated by the dehydration is returned to the pressure flotation separation tank 32.

In the embodiment described above, the structuring reactor 20 is provided before the pressurized floating separation apparatus 30. However, the present invention is not limited to the embodiment, and is also applied to an embodiment in which the structure reactor 20 is not provided the feeding section 22 is provided to the pressurized floating separation apparatus 30.

The ultrafine bubble containing liquid used in ultrafine bubble cleaning in the embodiment is produced by the ultrafine bubble containing liquid production system 50. The ultrafine bubble containing liquid production system 50 is configured to have a gas-liquid mixing section 52, a pressurization pump 56, and the bubble containing liquid separating system 60.

The gas-liquid mixing section 52 is configured to mix gas formed by negative pressure within the pressurized liquid flowing in from the inlet pipe 52B at the ejector section 52A, thereby to discharge bubble containing liquid from the discharge pipe 52C to the raw liquid supply pipe 54.

Furthermore, pressurized bubble containing water is supplied from the pressurizing pump 56 to the bubble containing liquid separation system 60 via the pressure delivery pipe 58, ensuring that the superfine bubble-containing liquid is supplied under pressurized conditions.

The bubble containing liquid separating system 60 includes a storage type pressurized reaction tank having a circular cross section. The bubble containing liquid separating system 60 is configured to include a pressurized liquid inlet port 61 that is provided on an upper side face of the tank and into which the ultrafine bubble containing liquid transferred through the pressure transfer pipe 58 flows, and converts the flowing-in pressurized liquid into a downward swirling flow along the inner circumferential face of the tank.

The pressurized liquid flowing into the tank will be converted into a swirling flow. However, the liquid at a center part of the swirling flow in the tank is discharged from the central liquid discharge port 63 via an open/close valve 65 to exit side of the reaction tank 21 and the liquid at an outside part of the swirling flow is discharged from the pressurized liquid discharge port 62 that is provided on a lower side face of the tank.

Of the liquid in the tank, a part that contains ultrafine bubbles and has a relatively large specific gravity is concentrated outside of the swirling, and a part that contains bubbles larger than the ultrafine bubbles and has a relatively small specific gravity is concentrated to the central part of the swirling flow by the swirling flow. Therefore, of the liquid flowing into the tank, the part that contains the relatively large bubbles is discharged from the central liquid discharge port 63, and the rest contains more ultrafine bubbles and is discharged from the pressurized liquid discharge port 62. Accordingly, there is less opportunity of bringing the ultrafine bubbles into contact with the larger bubbles and including the ultrafine bubbles, and the ultrafine bubbles are unlikely to be broken.

The size of bubbles contained in the ultrafine bubble containing liquid is mostly 100 nm or less. However, when the liquid is passed through the gas-liquid mixing section 52 a plurality of times, the ratio of bubbles of 30 nm or less is increased. Bubbles of less than 10Å and3 Å or more, though not all, could be confirmed. For example, as shown in JP Patent No.6120427, measurement can be performed as follows using synthetic zeolites.

The ultrafine bubble containing liquid is always filled in the bubble containing liquid separating system 60 having a tank shape via the pressure transfer pipe 58, and the pressurized liquid is discharged outside in only an amount corresponding to the flow amount of the pressurized liquid from the central liquid discharge port 63 and the pressurized liquid discharge port 62.

The pressurized liquid that is supplied from the pressure transfer 58 through the pressurized liquid inlet port 61 to the pressurized liquid in the bubble containing liquid separating system 60 flows into the tank as a swirling flow that flows diagonally downward along the inner circumferential surface of the tank constituting the bubble containing liquid separating system 60.

Thus, a large swirling flow that flows counterclockwise downward is formed in the tank, a liquid that contains relatively large bubbles and has a smaller specific gravity is concentrated to the central part of the swirling flow, and an ultrafine bubble containing liquid that contains relatively small ultrafine bubbles and has a larger specific gravity is concentrated to a part along the inner circumferential surface of the tank. The former liquid is discharged from the central liquid discharge port 63, and the latter liquid is discharged from the pressurized liquid discharge port 62 and goes to inlet port via the pressurized liquid pipe 66.

If the residual PFAS content in the effluent discharged from outlet 31B of pressure flotation separation tank 32 is high, the effluent may be returned to reaction tank 21 via untreated liquid return pipe 55, and structural agent(s) 1 and 2 may be reintroduced for further treatment.

A physical property in which the rising rate is lower as the size of fine bubbles is smaller is found. By a mechanism using the swirling flow, separation of larger bubbles and smaller fine bubbles promotes. As a result, the liquid in which the ratio of ultrafine bubbles is increased in the swirling flow is discharged from the pressurized liquid discharge port 62. The relatively large bubbles are separated and raised in swirling from a group of ultrafine bubbles by a centrifugal force, and concentrated to the vicinity of the upper central part of the tank, thereby being efficiently discharged.

The amount of relatively large separated bubbles is about 5% of the total amount of bubbles including ultrafine bubbles. The substantially whole amount of bubbles can be separated and removed.

Therefore, in the ultrafine bubble containing liquid discharged from the pressurized liquid discharge port 62, the amount of fine bubbles having a size of 100 nm or less or 30 nm or less and 10Å or more is slight, and the content of ultrafine bubbles having a size of 10Å or less is increased.

By the above-described processes, the ultrafine bubbles are not lost by joining the ultrafine bubbles to fine bubbles that are slightly present and have a size as relatively large as 10Å or more. Therefore, a specific function of the ultrafine bubbles can be exerted at a later stage.

The subcritical water treatment system 70 is disclosed, for example, in Japanese Patent Application Publication No. 2017-127845 and others, and is well known; therefore, its description is omitted.

In the subcritical water treatment system 70, the target material is subjected to subcritical conditions via high-temperature, high-pressure steam, causing the organic structures constituting PFAS to undergo hydrolysis and become low molecular weight. However, the fluorine contained in PFAS separates via subcritical water treatment faster than the carbon chains decompose. It then combines with aluminum components, iron components, or zinc components, forming stable inorganic salts such as aluminum fluoride. This, along with other decomposition products, is extracted as a slurry and transported out.

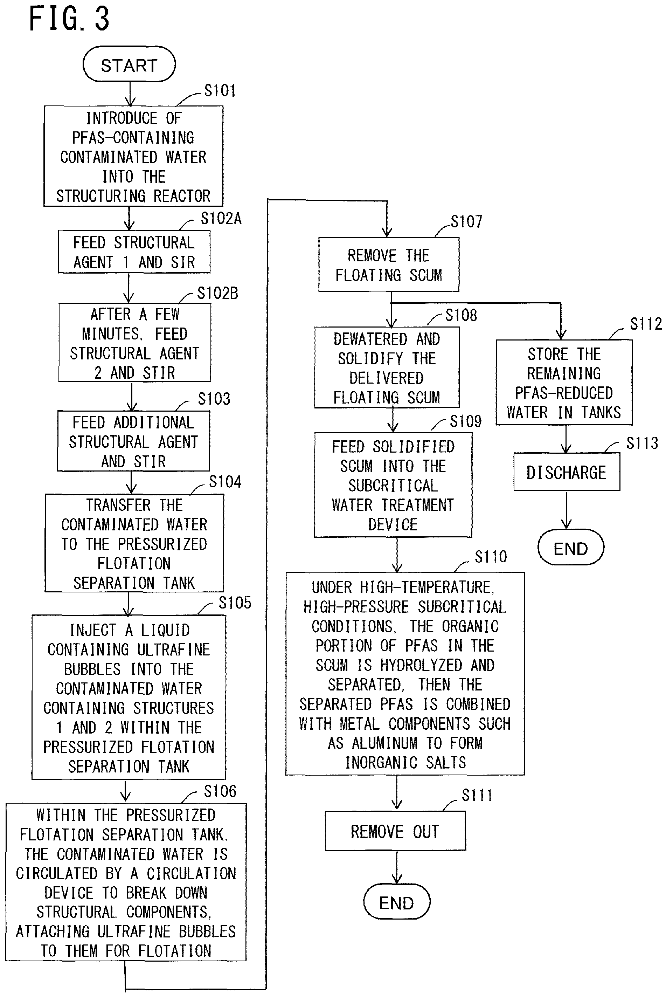

Next, referring to the flowchart in Figure 3, the process of capturing PFAS from contaminated water containing PFAS-containing aqueous mixtures using the PFAS capturing system of the embodiment and the process of producing PFAS-reduced water are described.

In step S101, introduce PFAS-containing contaminated water into the reaction tank 21.

Proceed to step S102A, where structural agent 1 is fed into the contaminated water within reaction tank 21 via structural agent 1 feeding apparatus 22A. A few minutes after or simultaneously with the introduction of structural agent 1, proceed to the next step S102B, where structural agent 2 is fed into the contaminated water via structural agent 2 feeding apparatus 22B and stirred. Further, in step S103, the contaminated water after stirring is moved within the reaction tank 21, and additional structural agent is fed into the contaminated water containing structure(s) 1 and 2 and the higher-order structure of PFAS via the additional structural agent feeding apparatus 22C. The fed structural agent 1, the structure 2, and additional structural agent are stirred with the contaminated water by the stirring device 22D, promoting the structural reaction.

In the above steps S102A and S102B, the structural agent 1, primarily composed of a water-soluble cationic polymer flocculant (A) containing a higher-order carbon chain structure, and polyferric chloride, ferric chloride, ferrous sulfate, ferric sulfate, polyaluminum chloride, barium sulfate, and zinc chloride. Stirring then forms the structure 1 within the contaminated water while trapping PFAS, and the structural agent 2 further traps PFAS, stabilizing its capturing.

Specifically, the structural agent 2 causes iron cations, aluminum cations, and other higher-order carbon chain compounds with water-soluble carbon chains to exist on the surface of the structural agent 1. These adsorb and capturing anionic PFAS. Furthermore, iron and aluminum cations-which are also inorganic coagulants-sandwich and stably retain the capturing PFAS by their cohesive force, forming a hydrophobic carbon chain with the water-soluble cationic polymer. This allows separation in water. aluminum, which also act as inorganic flocculants, to stably hold the adsorbed water-soluble cationic polymer with its hydrophobic carbon chain in a sandwich-like state between iron cations and aluminum cations. This enables separation in water. In this state, a water-soluble anionic polymer flocculant is further added to the reaction tank 21 as an additional structural agent from the additional structural agent feeding apparatus 22C. This addition strengthens the higher-order structure formed by the structures 1, 2, and the PFAS, further suppressing the separation of the PFAS.

Next, in step S104, the contaminated water containing the higher-order structure is transferred to the pressure flotation separation tank 32.

Proceed to step S105, where liquid containing ultrafine bubbles from the ultrafine bubble containing liquid production system 50 is injected into the contaminated water containing structures 1 and 2 within the pressure flotation separation tank 32. Proceed to the next step S106, within the pressure flotation separation tank 32, the contaminated water is circulated by the circulation device 40. The PFAS trapped within the higher-order structure formed by structures 1 and 2 adheres to the gas-liquid interface of the ultrafine bubbles and is then floated to the liquid surface by the ultrafine bubbles (floating scum).

This floating scum on the liquid surface is removed by the floating scum extracting device 34 in next step S107 and sent to the dehydration device 36.

In step S108, the delivered floating scum is dewatered and solidified by the dehydration device 36 to form dewatered aggregates. In the subsequent step S109, the dewatered aggregates are fed into the subcritical water treatment system 70.

Proceed to step S110. By supplying high-temperature, high-pressure steam from the steam supply device into the pressure vessel of the subcritical water treatment system, a subcritical state is achieved. This causes the organic portion of the PFAS within the dehydrated aggregate to undergo hydrolysis and be reduced to low molecular weight compounds. Next, the separated fluorine, a decomposition product of PFAS, combines with iron, aluminum, and zinc components to form stabilized inorganic fluorine compounds containing inorganic salts (such as aluminum fluoride). Specifically, if aluminum components are present in close proximity (at nanoscale distances), they can form stable inorganic salts (inorganic compounds) with aluminum fluoride.

In the present invention, since the iron, aluminum, or zinc components within the structure 2 are present in close proximity to the PFAS, the bonding is rapidly strengthened.

Upon completion of inorganic conversion, the decomposition products are removed from the outlet of the subcritical water treatment system 70 in step S111, concluding the process.

Further, when the floating scum is removed in step S107, the remaining water becomes PFAS-reduced water with a decreased PFAS concentration. This PFAS-reduced water is discharged from an outlet 31B of the pressure flotation separation tank 32. In step S112, it is stored in a PFAS reduced water tank 33. In step S113, it is discharged as appropriate, for example as drinking water, concluding the treatment process.

The remaining PFAS-reduced water is supplied as raw liquid from the raw liquid supply pipe 54 to the ultra-fine bubble containing liquid production system 50, and is also supplied to the reaction tank 21 together with the raw water via the untreated liquid return pipe 55.

In the above embodiment, additional structural agent is introduced into the contaminated water containing the higher-order structure of PFAS and structures 1 and 2 via additional structural agent feeding apparatus 22C. However, the present invention is not limited to this, and if the strength of the higher-order structure of PFAS is sufficient, introduction of additional structural agent may be omitted. Furthermore, when additional structural agents are introduced, if the fixation of PFAS is insufficient, a second reinforcement step may be provided to introduce a reinforcing agent having the same composition as the additional structural agent into the contaminated water.

### [Examples]

The types of structural agents and test results for Example 1 (Beaker Test) of the present invention are shown in Tables 1 and 2 below. The types of structural agents and test results for Example 2 (Field Test) are shown in Tables 3 and 4 below.

Note that the "concentration/target value" in Tables 1 and 3 refers to the target concentration of the structural agent relative to the volume of contaminated water (hereinafter referred to as source water) used in the test. Therefore, in the test, for example, for 500 cc of source water, an amount of structural agent 1 to achieve a concentration of 1 ppm, an amount of structural agent 2-1 to achieve a concentration of 2.5 ppm, and so on, were added to 500 cc of source water in a beaker.

As shown in Table 3, in Example 2, a water-soluble anionic polymer flocculant is used as an additional structural agent. This is based on the inventor's discovery, as described in the column titled "Means for Solving the Problems," that "when PFAS is confined within structures 1 and 2 and its mobility is restricted, conventional polymeric anionic flocculants can also be added for flocculation purposes."

Note that while the pressurised flotation separation apparatus was employed in Example 2, it was not used in Example 1. Furthermore, when a pH adjuster is employed, it also serves as part of the structural agent 2.

The difference in PFAS reduction rates is primarily attributed to the use of a pressurized flotation separation device in Example 2, which was not employed in Example 1. Specifically, when the pressurized flotation separation device is used, it demonstrates that iron components, aluminum components, and other elements contained within the structure 2 and in close proximity to fluorine at the nanoscale rapidly and with a high probability bind with the fluorine separated by PFAS hydrolysis, forming stable inorganic salts.

**[TABLE 1]**

| [EXAMPLE 1] | | |
|---|---|---|
| BEAKER TEST | | |
| | TYPES OF STRUCTURAL AGENTS | CONCENTRATION/TARGET |
| STRUCTURAL AGENT 1 | WATER-SOLUBLE CATIONIC POLYMER FLOCCULANT (A) | 1ppm |
| STRUCTURAL AGENT 2-1 | POLYIRON (LIQUID AGENT) | 2.5ppm |
| STRUCTURAL AGENT 2-2 | POLYALUMINUM CHLORIDE (LIQUID AGENT) | 2.5ppm |
| pH ADJUSTMENT | CAUSTIC SODA OR SODIUM CARBONATE | pH 6.5~7.5 |
| STRUCTURAL AGENT 2-3 | WATER-SOLUBLE CATIONIC POLYMER FLOCCULANT (B) | 1ppm |

**[TABLE 2]**

| | LAW WATER | TREATED WATER | PFAS REMOVAL RATE |
|---|---|---|---|
| PFAS CONCENTRATION | 5300ng/l | 3600ng/l | 32% |

**[TABLE 3]**

| [EXAMPLE 2] | | |
|---|---|---|
| FIELD TEST | | |
| | TYPES OF AGENTS | CONCENTRAT ION/TARGET |
| STRUCTURAL AGENT 1-1 | WATER-SOLUBLE CATIONIC POLYMER FLOCCULANT (A) | 1ppm |
| STRUCTURAL AGENT 2-1 | POLYIRON (LIQUID AGENT) | 35ppm |
| STRUCTURAL AGENT 2-2 | POLYALUMINUM CHLORIDE (LIQUID AGENT) | 35ppm |
| pH ADJUSTMENT | CAUSTIC SODA OR SODIUM CARBONATE | pH 6.5~7.5 |
| STRUCTURAL AGENT 2-3 | WATER-SOLUBLE CATIONIC POLYMER FLOCCULANT | 1ppm |
| ADDITIONAL STRUCTURAL AGENT 2-4 | WATER-SOLUBLE ANIONIC POLYMER FLOCCULANT | 0.5ppm |

**[TABLE 4]**

| | LAW WATER | TREATED WATER | PFAS REMOVAL RATE |
|---|---|---|---|
| PFAS CONCENTRATION | 4500ng/l | 660ng/l | 85.3% |

The beaker test [Example 1] and the field test [Example 2] show a significant difference in PFAS reduction rates, but the present invention demonstrates that a minimum of 30% and a maximum of 85.3% can be achieved.

### Industrial Applicability

It has potential for use in purification projects for contaminated water containing PFAS.

### Reference Signs List

10...PFAS capturing system
11...PFAS reduced water production system
20...Structuring reactor
21...Reaction tank
22...Feeding section
22A...Structural agent 1 feeding apparatus
22B...Structural agent 2 feeding apparatus
22C...Additional structural agent feeding apparatus
22D...Stirring device
30...Pressurized floating separation apparatus
31B...Discharge port
32...Pressure flotation separation tank
33...PFAS reduced water tank
34. Floating scum extracting device
36...Dehydration device
40...Circulation device
40A...Swirling discharge pipe
40B...Swirling flow guide
40C...Clearance
41...Inlet
50...Ultrafine bubble containing liquid production system
52...Gas-liquid mixing section
52A...Ejector section
52B...Inlet pipe
52C...Discharge pipe
52D...Gas introduction pipe
52E...Gas introduction volume control valve
54...Undiluted solution supply pipe
55...Untreated liquid return pipe
56...Pressurization pump
58...Pressure transfer pipe
60...Bubble containing liquid separating system
61...Pressurized liquid inlet port
62...Pressurized liquid discharge port
63...Central liquid discharge port
65...Open/close valve
66...Pressurized liquid pipe
70...Subcritical water treatment system
F...Flow

## Claims

1. A PFAS capturing method, including
a first capturing process, wherein a structural agent 1 comprising a water-soluble cationic polymeric flocculant (A) capable of forming higher-order structures containing high molecular weight carbon chains as a main agent is fed into contaminated water containing a PFAS-containing aqueous mixture and agitated to deposit a structure 1, and cause the aqueous mixture containing PFAS to be movably attached to the surface of the structure 1, and
a second capturing process, wherein a water-soluble cationic polymer flocculant (B) comprising at least one of inorganic agents including polyiron, ferric chloride, ferrous sulfate, ferric sulfate, polyaluminum chloride, sulfate band, and zinc chloride, and containing a positive charge and having a smaller cationic value than the water-soluble cationic polymer flocculant (A) as the main agent of the structural agent 2 is fed and stirred after or simultaneously with the start of the first capturing process to precipitate a structure 2 comprising at least one of iron cation, aluminum cation, and zinc cation with hydrophobic carbon chains, and the surface of the structure 2 is attached to the aqueous mixture containing PFAS on the structure 1, wherein the aqueous mixture containing PFAS is held stably in a sandwich-like state between the structure 1 and the structure 2, so that it can be separated from the water.

2. The PFAS capturing method according to claim 1, wherein
further includes a reinforcement process in which a water-soluble anionic polymeric flocculant is added to the contaminated water as an additional structural agent, while the structure 1 and the aqueous mixture containing PFAS are held stable and separable in the water through the second capturing process with the structure 2.

3. The PFAS capturing method according to claim 2, wherein
the water-soluble anionic polymer flocculant in the reinforcement process is weakly anionic with an anionic value of 1-10 mol%.

4. The PFAS capturing method according to claim 2 or 3, wherein
following the reinforcement process, there is a second reinforcement process in which an additional reinforcing structural agent of the same composition as the additional structural agent is fed into the contaminated water and agitated.

5. The PFAS capturing method according to claim 1, wherein
further includes a pressurized floating separation process in which a pressurized jet of liquid containing ultrafine bubbles is formed in the contaminated water containing the structure 1 and structure 2, which is stably holding PFAS, to move PFAS trapped between the structure 1 and structure 2 to the surface of the ultrafine bubbles together with the structures comprising the structure 1 and the structure 2, and to cause the PFAS is sorbed onto the bubbles by hydrophobic effect and floated and separated as floating scam to the top of the contaminated water.

6. The PFAS capturing method according to claim 2, wherein
further includes a pressurized floating separation process in which a pressurized jet of liquid containing ultrafine bubbles is formed in the contaminated water containing the structure 1 and structure 2, which is stably holding PFAS, to move PFAS trapped between the structure 1 and structure 2 to the surface of the ultrafine bubbles together with the structures comprising the structure 1 and the structure 2, and to cause the PFAS is sorbed onto the bubbles by hydrophobic effect and floated and separated as floating scam to the top of the contaminated water.

7. The PFAS capturing method according to claim 5 or 6, wherein
includes a scum collection process to take out the floating scum from the pressurized floating separation process.

8. The PFAS capturing method according to claim 7, wherein
includes a scum dehydration process in which the extracted floating scum is dehydrated to dehydrated flocculence, and
a mineralization process in which the dehydrated flocculence is hydrolyzed in a subcritical atmosphere at high temperature and high pressure to promote mineralization by bonding fluorine atoms separated from the organic partial carbon chains of the PFAS contained in the dehydrated flocculence with iron, aluminum, and zinc present in the flocculence.

9. The PFAS capturing method according to claim 5 or 6, wherein
the first and second capturing processes and the pressurized floating separation process are performed in the same reaction tank.

10. The PFAS capturing method according to claim 5 or 6, wherein
includes a recapture process in which the PFAS reduced water after taking out the floating scum in the pressurized floating separation process is returned to the first and second capturing processes and the structural agent 1 and structural agent 2 are fed again.

11. A method for producing PFAS reduced water using the PFAS capturing method of any one of claims 1 to 3, comprising a pressurized floating separation process for separating PFAS from contaminated water containing the structure 1 and structure 2, wherein the PFAS is adsorbed
the pressurized floating separation process is performed by forming a jet of pressurized ultrafine bubble containing liquid in the contaminated water containing the structure 1 and structure 2, which stably holds PFAS and the structure 1 and structure 2, causing PFAS trapped between the structure 1 and structure 2 to move to the surface of the ultrafine bubbles together with the structure consisting of structure 1 and structure 2, and to be surrounded by the ultrafine bubbles together with structure 1, thereby floating and it causes the PFAS to float and separate in the upper part of the contaminated water as scum.

12. The method for producing water with reduced PFAS according to claim 11, wherein
includes a scum collection process to take out the floating scum from the pressurized floating separation process.

13. The method for producing water with reduced PFAS according to claim 12, wherein
includes a recapturing process in which a portion of the PFAS reduced water after taking out the floating scum in the pressurized floating separation process is returned to the first and second capturing processes and the structural agent 1 and structural agent 2 are fed again.

14. A PFAS capturing system to capture PFAS from contaminated water containing an aqueous mixture containing PFAS, comprising,
a feeding section for feeding structural agent 1 and structural agent 2 into the contaminated water stored in a reaction tank,
a jet forming section for forming a jet of pressurized ultrafine bubble containing liquid in the contaminated water after reaction of the fed structural agent 1 and structural agent 2 with the contaminated water, and a floating scum extraction device,
the feeding section is provided with a structural agent 1 feeding apparatus and a structural agent 2 feeding apparatus, and
the structural agent 1 feeding apparatus is configured to feed a structural agent 1 that uses a water-soluble cationic polymer flocculant (A) as a main agent being capable of forming a higher order structure containing high molecular weight carbon chains in stored contaminated water,
the structural agent 2 feeding apparatus is configured to feed the structural agent 2, which is a water-soluble cationic polymeric flocculant (B) as a main agent, being consist of at least one of the inorganic agents including polyiron, ferric chloride, ferrous sulfate, ferric sulfate, polyaluminum chloride, sulfate band, and zinc chloride, and contains a positive charge and has a smaller cationic value than the water-soluble cationic polymeric flocculant (A), into the contaminated water, and
the reaction tank is configured to form structure 1 and structure 2 by structural agent 1 and structural agent 2, respectively, to adsorb PFAS on structure 1 and to overlay PFAS in a trapped state with anionic properties, hydrophobic carbon chains the structure 2, which is a higher-order structure consisting of at least one of iron cation, aluminum cation, and zinc cation with hydrophobic carbon chain, is configured to hold the PFAS molecules stably by preventing their movement in a sandwich-like manner to enable separation in water,
the jet forming section is configured to form a jet of pressurized ultrafine bubble containing water in the contaminated water which containing the structure 1 and structure 2 with PFAS sandwiched therebetween and causing the PFAS trapped in the higher-order structures of the structure 1 and the structure 2 to move to the surface of the ultrafine bubbles, thereby causing the PFAS to float and separate as floating scum from the contaminated water,
the floating scum extraction device is configured to remove the floating scum from the surface of the contaminated water.

15. The PFAS capturing system according to 14, wherein
it has an additional structural agent feeding apparatus that adds a water-soluble anionic polymer flocculant as an additional structural agent to the contaminated water while the aqueous mixture containing PFAS is held stable and separable between the structure 1 and the structure 2 so that it can be separated in the water.

16. The PFAS capturing system according to claim 14 or 15, wherein
the feeding section is provided in a reaction tank in which the contaminated water is stored,
a pressurized floating separation apparatus is provided which including a pressurized floating separation tank to receive contaminated water in which structural agent 1 and structural agent 2 are fed in the reaction tank, and the jet formation section and a floating scum extraction system are provided in the pressurized floating separation tank.

17. The PFAS capturing system according to claim 14 or 15, wherein
a pressurized floating separation apparatus is provided with a pressurized floating separation tank that receives contaminated water, and the feeding section and the jet flow forming section are both provided in the pressurized floating separation tank, and
the jet formation section is designed to start forming a jet of pressurized ultrafine bubble containing liquid in the contaminated water in the pressurized floating separation tank after the completion of the feeding of structural agent 1 and structural agent 2 from the feeding section of the PFAS capturing system.

18. The PFAS capturing system according to claim 14 or 16, wherein
a dehydration device for dehydrating floating scum generated and collected by the jet of pressurized ultrafine bubble containing water in the jet formation section into dehydrated flocculence, and
a subcritical water treatment system is also provided, the PFAS capturing system is configured to promote the mineralization of fluorine atoms separated from the carbon chains of the PFAS contained in the dehydrated flocculence by hydrolyzing the dehydrated flocculence in a subcritical atmosphere at high temperature and high pressure, and by bonding with iron, aluminum, and zinc present in the dehydrated flocculence.

19. The PFAS capturing system according to claim 16, wherein
the PFAS capturing system with an untreated liquid return pipe that can return the PFAS reduced water after the separation of floating scum in the pressurized floating separation apparatus as untreated water to which structural agent 1 and structural agent 2 are added from the feeding section.

20. A system for producing water with reduced PFAS according to claim 17, wherein
configured to extract the remainder of the floating separation from the contaminated water as floating scum as PFAS reduced water.

21. The system for producing water with reduced PFAS according to claim 20, wherein
an untreated water return pipe is provided that allows the PFAS reduction purified water after the separation of floating scum in the pressure flotation separation apparatus to be returned as untreated water into which structural agent 1 and structural agent 2 are added from the feeding section.
